# EUROPEAN PATENT SPECIFICATION

(11) **EP 4 461 772 B1**
(45) Date of publication and mention of the grant of the patent: **25.02.2026**
(21) Application number: 23172564.9
(22) Date of filing: 10.05.2023
(51) Int. Cl.: C08L 71/12

(54) **THERMOPLASTIC COMPOSITION, METHOD FOR THE MANUFACTURE THEREOF, AND ARTICLES MADE THEREFROM**
THERMOPLASTISCHE ZUSAMMENSETZUNG, VERFAHREN ZU IHRER HERSTELLUNG UND DARAUS HERGESTELLTE ARTIKEL
COMPOSITION THERMOPLASTIQUE, SON PROCÉDÉ DE FABRICATION ET ARTICLES FABRIQUÉS À PARTIR DE CELLE-CI

(43) Date of publication of application: 13.11.2024
(73) Proprietor: SHPP Global Technologies B.V., 4612 PX Bergen op Zoom (NL)
(72) Inventor: Koevoets, Christiaan Henricus Johannes, Bergen op Zoom (NL)
(74) Representative: Balder IP Law, S.L.

(56) References cited:
- EP-A1- 3 511 376
- EP-A1- 4 151 687

## Description

### BACKGROUND

Articles for water management applications are often subjected to fluctuations in temperature and pressure. They must also resist failure when exposed to cycles of fluctuating loads or stresses associated with the pressure shocks resulting from opening and closing taps (the so-called "water hammer effect") and the temperature variations associated with flow of warm water into a cold fitting or cold water into a warm fitting. Historically, copper metal has been the material most commonly used for hot water pipes and fittings. Recently, certain plastics, such as polysulfones, aromatic polyamides and polyethersulfones, have also been used for water management applications, but these plastic materials are quite expensive relative to other plastics.

There is therefore a continuing need for materials that exhibit the range of properties required for use in various water-contacting articles. EP3511376A1 discloses compositions comprising 18.5 - 28.2 wt% of PS and 37.5 wt% of PPE with an intrinsic viscosity of about 0.46 deciliter per gram for water contact applications. EP4151687A1 discloses compositions comprising two PPEs at about 71 and 14 wt% with intrinsic viscosities of 0.40 deciliter/gram and 0.46 deciliter/gram and atactic PS at about 14 wt%.

### SUMMARY

A thermoplastic composition comprises 30 to 85 weight percent of a first poly(phenylene ether) having an intrinsic viscosity of greater than 0.5 to 1.45 deciliters per gram, measured at 25°C in chloroform using an Ubbelohde viscometer, and optionally a second poly(phenylene ether) having an intrinsic viscosity of 0.3 to 0.5 deciliters per gram, measured at 25°C in chloroform using an Ubbelohde viscometer, provided that a weighted average of the intrinsic viscosity of the first poly(phenylene ether) and the second poly(phenylene ether) is greater than 0.5; and 15 to 70 weight percent of a homopolystyrene; wherein weight percent of each component is based on the total weight of the composition.

A method for the manufacture of the thermoplastic composition comprises melt-mixing the components of the composition; and optionally, extruding the composition.

An article comprising the thermoplastic composition represents another aspect of the present invention.

The above described and other features are exemplified by the following figure and detailed description.

### BRIEF DESCRIPTION OF THE DRAWING

The following figure represents exemplary embodiments.

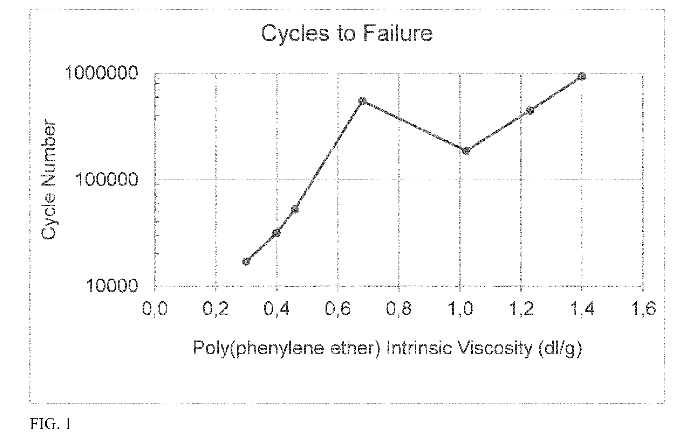

FIG. 1 is a graph of poly(phenylene ether) intrinsic viscosity versus number of cycles to failure.

### DETAILED DESCRIPTION

The present inventor has discovered that a desirable combination of hydrolytic stability, fatigue resistance, and melt-volume flow rate can be achieved by a composition comprising particular amounts of a poly(phenylene ether) having an intrinsic viscosity of greater than 0.5 to 1.45 deciliters per gram and a homopolystyrene. In an advantageous feature, it has been unexpectedly discovered that the desired properties can be obtained even in the absence of a reinforcing filler or a rubber-modified impact modifier, which can provide lower density materials as well as easier processing. A significant improvement is therefore provided by the present invention.

Accordingly, a thermoplastic composition represents an aspect of the present invention, the thermoplastic composition comprising 30 to 85 weight percent of a first poly(phenylene ether) having an intrinsic viscosity of greater than 0.5 to 1.45 deciliters per gram, measured at 25°C in chloroform using an Ubbelohde viscometer, and optionally a second poly(phenylene ether) having an intrinsic viscosity of 0.3 to 0.5 deciliters per gram, measured at 25°C in chloroform using an Ubbelohde viscometer, provided that a weighted average of the intrinsic viscosity of the first poly(phenylene ether) and the second poly(phenylene ether) is greater than 0.5; and 15 to 70 weight percent of a homopolystyrene; wherein weight percent of each component is based on the total weight of the composition.

The thermoplastic composition includes a first poly(phenylene ether). According to a particular embodiment, a poly(phenylene ether) comprises repeating structural units according to formula (1) 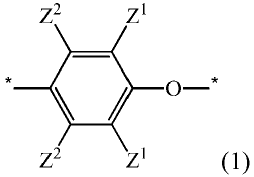 wherein each occurrence of Z¹ is independently halogen, unsubstituted or substituted C₁₋₁₂ hydrocarbyl provided that the hydrocarbyl group is not tertiary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms; and each occurrence of Z² is independently hydrogen, halogen, unsubstituted or substituted C₁-₁₂ hydrocarbyl provided that the hydrocarbyl group is not tertiary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

According to a particular embodiment, the first poly(phenylene ether) comprises 2,6-dimethyl-1,4-phenylene ether repeating units, that is, repeating units according to formula (2) 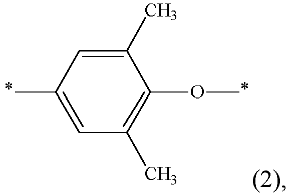 2,3,6-trimethyl-1,4-phenylene ether repeating units, or a combination thereof.

The first poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

The first poly(phenylene ether) has an intrinsic viscosity of greater than 0.5 to 1.45 deciliters per gram (dl/g), measured at 25°C in chloroform using an Ubbelohde viscometer. Within this range, the intrinsic viscosity of the first poly(phenylene ether) can be 0.55 to 1.45 dl/g, or 0.6 to 1.45 dl/g, or 0.65 to 1.45 dl/g.

The thermoplastic composition can optionally include a second poly(phenylene ether) having an intrinsic viscosity that is less than the intrinsic viscosity of the first poly(phenylene ether). For example, the composition an optionally further include a second poly(phenylene ether) having an intrinsic viscosity that is 0.3 to 0.5 dl/g, measured at 25°C in chloroform using an Ubbelohde viscometer.

When present, the second poly(phenylene ether) can be present in combination with the first poly(phenylene ether) in an amount effective to provide a weighted average of the intrinsic viscosity of the first poly(phenylene ether) and the second poly(phenylene ether) that is greater than 0.5 dl/g, preferably greater than 0.5 to 1.45 dl/g, or 0.55 to 1.45 dl/g, or 0.6 to 1.45 dl/g, or 0.65 to 1.45 dl/g. For example, when present, the second poly(phenylene ether) can be present in a weight ratio of the first poly(phenylene ether) to the second poly(phenylene ether) of 0.9:1 to 10:1, or 0.9:1 to 2:1, or 0.9:1 to 1.1:1. **In** an embodiment, the weight ratio of the first poly(phenylene ether) to the second poly(phenylene ether) can be 1:1. **In** an embodiment, when present, the second poly(phenylene ether) can be included in the composition in an amount that is equal to or less than the amount of the first poly(phenylene ether). **In** an embodiment, a poly(phenylene ether) other than the first poly(phenylene ether) is not included in the composition.

The first and the second poly(phenylene ether) can be prepared by an oxidative polymerization method. **In** such a method, the poly(phenylene ether) is the product of oxidatively polymerizing a monomer mixture comprising a monohydric phenol, which can be as described above.

The first poly(phenylene ether) and, when present, the second poly(phenylene ether) can be included in the composition in a combined amount of 30 to 85 weight percent, or 30 to 75 weight percent, based on the total weight of the composition. Within this range, the first poly(phenylene ether) and, when present, the second poly(phenylene ether) can be present in a combined amount of 30 to 70 weight percent, or 30 to 65 weight percent, 35 to 70 weight percent, or 35 to 65 weight percent, or 40 to 70 weight percent, each based on the total weight of the composition.

**In** a particular embodiment, the composition comprises the first poly(phenylene ether), and no other poly(phenylene ether)s are present in the composition. The first poly(phenylene ether) can be present in an amount of 30 to 85 weight percent, or 30 to 75 weight percent, based on the total weight of the composition. Within this range, the first poly(phenylene ether) can be present in an amount of 30 to 70 weight percent, or 30 to 65 weight percent, or 35 to 70 weight percent, or 35 to 65 weight percent, or 40 to 70 weight percent, each based on the total weight of the composition. In an embodiment, the first poly(phenylene ether) can be present in an amount of 40 to 65 weight percent, or 45 to 63 weight percent, 45 to 60 weight percent, or 50 to 59 weight percent.

In a particular embodiment, the composition comprises the first poly(phenylene ether) and the second poly(phenylene ether). The combination of the first poly(phenylene ether) and the second poly(phenylene ether) can be present in an amount of 30 to 85 weight percent, or 30 to 75 weight percent, based on the total weight of the composition. Within this range, the first poly(phenylene ether) and the second poly(phenylene ether) can be present in a combined amount of 30 to 70 weight percent, or 30 to 65 weight percent, or 35 to 70 weight percent, or 35 to 65 weight percent, or 40 to 70 weight percent, each based on the total weight of the composition. In an embodiment, the first poly(phenylene ether) and the second poly(phenylene ether) can be present in a combined amount of 40 to 65 weight percent, or 45 to 60 weight percent, or 50 to 59 weight percent. In an embodiment, the first poly(phenylene ether) and, when present, the second poly(phenylene ether) can be present in a combined amount of 30 to 50 weight percent, or 30 to 45 weight percent, or 32 to 42 weight percent.

When the composition comprises the first poly(phenylene ether) and the second poly(phenylene ether), the first poly(phenylene ether) and the second poly(phenylene ether) can each independently be present in an amount of 10 to 65 weight percent, based on the total weight of the composition, provided that the total amount of the first poly(phenylene ether) and the second poly(phenylene ether) sums to 30 to 85 weight percent, and that the weight ratio of the first poly(phenylene ether) and the second poly(phenylene ether) is effective to provide a weighted average of the intrinsic viscosity of the poly(phenylene ether) component of greater than 0.5 dl/g.

According to a further particular embodiment, in addition to the first poly(phenylene ether) and, optionally, the second poly(phenylene ether) (referred to collectively as "the poly(phenylene ether) component"), the thermoplastic composition can further comprise a homopolystyrene. As used herein, the term "homopolystyrene" refers to a homopolymer of styrene and can also be referred to as crystal polystyrene. Thus, the residue of any monomer other than styrene is excluded from the homopolystyrene. The homopolystyrene can be atactic, syndiotactic, or isotactic. In an embodiment, the homopolystyrene is atactic. The homopolystyrene can have a melt volume flow rate of 1.5 to 35 grams per 10 minutes (g/10 min), or 1.5 to 30 g/10 min, or 1.5 to 20 g/10 min, or 1.5 to 10 g/10 min, or 1.5 to 5 g/10 min, each measured at 200°C and 5 kilogram (kg) load according to ISO 1133. The homopolystyrene can have a weight average molecular weight of 50,000 to 450,000 grams per mole (g/mol), determined using gel permeation chromatography. In an embodiment, the homopolystyrene is a crystal polystyrene having a melt volume flow rate of 1.5 to 5 g/10 min, measured at 200°C and 5 kg load according to ISO 1133.

The homopolystyrene is present in the composition in an amount of 15 to 70 weight percent, based on the total weight of the composition. Within this range, the homopolystyrene can be present in an amount of 15 to 60 weight percent, or 15 to 50 weight percent, or 15 to 45 weight percent, or 20 to 45 weight percent, or 25 to 43 weight percent, each based on the total weight of the composition.

According to a further particular embodiment, in addition to the first poly(phenylene ether), optionally the second poly(phenylene ether), and optionally the homopolystyrene, the thermoplastic composition can further comprise a hydrogenated block copolymer of a conjugated diene and an alkenyl aromatic. For brevity, this component is referred to as the "hydrogenated block copolymer". The hydrogenated block copolymer can comprise 10 to 90 weight percent of poly(alkenyl aromatic) content and 90 to 10 weight percent of hydrogenated poly(conjugated diene) content, based on the weight of the hydrogenated block copolymer. In an embodiment, the hydrogenated block copolymer is a low poly(alkenyl aromatic content) hydrogenated block copolymer in which the poly(alkenyl aromatic) content is 10 to less than 40 weight percent, or 20 to 35 weight percent, or 25 to 35 weight percent, or 30 to 35 weight percent, all based on the weight of the low poly(alkenyl aromatic) content hydrogenated block copolymer. In an embodiment, the hydrogenated block copolymer is a high poly(alkenyl aromatic content) hydrogenated block copolymer in which the poly(alkenyl aromatic) content is 40 to 90 weight percent, or 50 to 80 weight percent, or 60 to 70 weight percent, all based on the weight of the high poly(alkenyl aromatic content) hydrogenated block copolymer.

In an embodiment, the hydrogenated block copolymer has a weight average molecular weight of 40,000 to 400,000 g/mol. The number average molecular weight and the weight average molecular weight can be determined by gel permeation chromatography and based on comparison to polystyrene standards. In an embodiment, the hydrogenated block copolymer has a weight average molecular weight of 200,000 to 400,000 g/mol, or 220,000 to 350,000 g/mol. In an embodiment, the hydrogenated block copolymer has a weight average molecular weight of 40,000 to 200,000 g/mol, or 40,000 to 180,000 g/mol, or 40,000 to 150,000 g/mol.

The alkenyl aromatic monomer used to prepare the hydrogenated block copolymer according to an embodiment can have the structure according to formula (6) 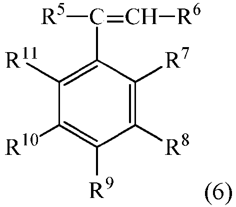 wherein R⁵ and R⁶ each independently represent a hydrogen atom, a C₁₋₈ alkyl group, or a C₂₋₈ alkenyl group; R⁷ and R¹¹ each independently represent a hydrogen atom, a C₁₋₈ alkyl group, a chlorine atom, or a bromine atom; and R⁸, R⁹, and R¹⁰ each independently represent a hydrogen atom, a C₁₋₈ alkyl group, or a C₂₋₈ alkenyl group, or R⁸ and R¹⁰ are taken together with the central aromatic ring to form a naphthyl group, or R⁹ and R¹⁰ are taken together with the central aromatic ring to form a naphthyl group. Specific alkenyl aromatic monomers include, for example, styrene, chlorostyrenes such as p-chlorostyrene, methylstyrenes such as alpha-methylstyrene and p-methylstyrene, and t-butylstyrenes such as 3-t-butylstyrene and 4-t-butylstyrene. In an embodiment, the alkenyl aromatic monomer is styrene.

The conjugated diene used to prepare the hydrogenated block copolymer, in an embodiment, can be a C₄₋₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In an embodiment, the conjugated diene is 1,3-butadiene, 2-methyl-1,3-butadiene, or a combination thereof. In an embodiment, the conjugated diene is 1,3-butadiene.

According to a particular embodiment, the hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In an embodiment, the aliphatic unsaturation in the (B) block is reduced by at least 50 percent, or at least 70 percent. The arrangement of blocks (A) and (B) includes a linear structure, a grafted structure, and a radial teleblock structure with or without a branched chain. Linear block copolymers include tapered linear structures and non-tapered linear structures. In an embodiment, the hydrogenated block copolymer has a tapered linear structure. In an embodiment, the hydrogenated block copolymer has a non-tapered linear structure. In an embodiment, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In an embodiment, the hydrogenated block copolymer is a diblock copolymer, a triblock copolymer, or a combination thereof.

In an embodiment, the hydrogenated block copolymer excludes the residue of monomers other than the alkenyl aromatic compound and the conjugated diene. In an embodiment, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In an embodiment, the hydrogenated block copolymer includes the residue of one or more acid functionalizing agents, such as maleic anhydride. In an embodiment, the hydrogenated block copolymer comprises a polystyrene-poly(ethylene-butylene)-polystyrene triblock copolymer.

In an embodiment, the hydrogenated block copolymer is a polystyrene-poly(ethylene-butylene)-polystyrene triblock copolymer having a polystyrene content of 10 to 50 weight percent, or 20 to 40 weight percent, or 20 to 35 weight percent, or 25 to 35 weight percent, based on the weight of the polystyrene-poly(ethylene-butylene)-polystyrene triblock copolymer. In these embodiments, the polystyrene-poly(ethylene-butylene)-polystyrene triblock copolymer can, optionally, have a weight average molecular weight of 200,000 to 400,000 g/mol, or 250,000 to 350,000 g/mol, determined by size exclusion chromatography using polystyrene standards.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON^{™} G1701 (having 37 weight percent polystyrene) and G1702 (having 28 weight percent polystyrene); the polystyrene-poly(ethylene-butylene)-polystyrene triblock copolymers available from Kraton Performance Polymers Inc.as KRATON^{™} G1641 (having 33 weight percent polystyrene), G1650 (having 30 weight percent polystyrene), G1651 (having 33 weight percent polystyrene), and G1654 (having 31 weight percent polystyrene); and the polystyrene-poly(ethylene-ethylene/propylene)-polystyrene triblock copolymers available from Kuraray as SEPTON^{™} S4044, S4055, S4077, and S4099. Additional commercially available hydrogenated block copolymers include polystyrene-poly(ethylene-butylene)-polystyrene (SEBS) triblock copolymers available from Dynasol as CALPRENE^{™} H6140 (having 31 weight percent polystyrene), H6170 (having 33 weight percent polystyrene), H6171 (having 33 weight percent polystyrene), and H6174 (having 33 weight percent polystyrene); and from Kuraray as SEPTON^{™} 8006 (having 33 weight percent polystyrene) and 8007 (having 30 weight percent polystyrene); polystyrene-poly(ethylene-propylene)-polystyrene (SEPS) copolymers available from Kuraray as SEPTON^{™} 2006 (having 35 weight percent polystyrene) and 2007 (having 30 weight percent polystyrene); and oil-extended compounds of these hydrogenated block copolymers available from Kraton Performance Polymers Inc.as KRATON^{™} G4609 (containing 45% mineral oil, and the SEBS having 33 weight percent polystyrene) and G4610 (containing 31% mineral oil, and the SEBS having 33 weight percent polystyrene); and from Asahi as TUFTEC^{™} H1272 (containing 36% oil, and the SEBS having 35 weight percent polystyrene). Mixtures of two of more hydrogenated block copolymers can be used. In an embodiment, the hydrogenated block copolymer comprises a polystyrene poly(ethylenebutylene)-polystyrene triblock copolymer having a weight average molecular weight of at least 100,000 g/mol, or 200,000 to 400,000 g/mol.

The hydrogenated block copolymer, when present, can be included in the composition in an amount of 1 to 15 weight percent, based on the total weight of the thermoplastic composition. Within this range, the hydrogenated block copolymer can be present in an amount of 1 to 10 weight percent, or 1 to 8 weight percent, or 1 to 6 weight percent, or 1 to 5 weight percent, or 2 to 4 weight percent, each based on the total weight of the thermoplastic composition.

The thermoplastic composition, according to a particular embodiment, can optionally further include an additive composition comprising one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive composition can include an impact modifier, flow modifier, antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styrene-acrylonitrile copolymer (TSAN)), or a combination thereof. For example, a combination of a mold release agent and an antioxidant can be used. In general, the additives are used in the amounts generally known to be effective. For example, the total amount of the additive composition (other than any impact modifier, filler, or reinforcing agent) can be 1 to 10 weight percent based on the total weight of the composition.

The thermoplastic composition can optionally further include a reinforcing agent. Possible fillers or reinforcing agents include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well as a combination thereof. The fillers and reinforcing agents can be coated with a layer of metallic material to facilitate conductivity, or surface treated to improve adhesion and dispersion with the polymer matrix.

In an embodiment, the reinforcing filler can be a reinforcing fiber. Exemplary reinforcing fibers can include glass fibers, carbon fibers, mineral fibers, or a combination thereof. In a specific embodiment, the reinforcing filler can comprise glass fibers.

When present, the reinforcing agent can be present in an amount of 5 to 55 weight percent, based on the total weight of the thermoplastic composition. Within this range, the reinforcing agent can be present in an amount of 10 to 40 weight percent, or 20 to 40 weight percent, or 25 to 35 weight percent, each based on the total weight of the composition.

In an embodiment, a reinforcing agent can be minimized or excluded from the thermoplastic composition. For example, the composition can comprise 5 weight percent or less, or 3 weight percent or less, or 1 weight percent or less of a reinforcing agent. In an embodiment, the thermoplastic composition can exclude a reinforcing agent. In an embodiment, the composition can comprise 5 weight percent or less, or 3 weight percent or less, or 1 weight percent or less of glass fibers. In an embodiment, the thermoplastic composition can exclude glass fibers.

The thermoplastic composition can optionally exclude or minimize (i.e., present in an amount of 5 weight percent or less, or 1 weight percent or less, or 0.1 weight percent or less) any component not specifically provided for herein. For example, the thermoplastic composition can minimize or exclude any thermoplastic polymer other than the first poly(phenylene ether), the second poly(phenylene ether), the homopolystyrene, and the hydrogenated block copolymer. **In** an embodiment, the composition can comprise less than 15 weight percent of a rubber-modified polystyrene, or less than 10 weight percent of a rubber-modified polystyrene. For example, the composition can comprise less than 5 weight percent, or less than 1 weight percent of a rubber-modified polystyrene. **In** an embodiment, a rubber-modified polystyrene can be excluded from the composition.

**In** an embodiment, the amounts of the first poly(phenylene ether), the homopolystyrene, and, when present, the second poly(phenylene ether) can sum to at least 50 weight percent, based on the total weight of the composition. For example, the amounts of the first poly(phenylene ether), the homopolystyrene, and, when present, the second poly(phenylene ether) can sum to at least 60 weight percent, or at least 70 weight percent, or at least 80 weight percent, or at least 90 weight percent, each based on the total weight of the composition. In an embodimentwherein no reinforcing fillers are present in the composition, the amounts of the first poly(phenylene ether), the homopolystyrene, and, when present, the second poly(phenylene ether) can sum to at least 75 weight percent, or at least 80 weight percent, or at least 85 weight percent, or at least 90 weight percent. **In** an embodimentwherein the composition includes a reinforcing filler, the amounts of the first poly(phenylene ether), the homopolystyrene, and, when present, the second poly(phenylene ether) can sum to at least 50 weight percent, or at least 55 weight percent, or at least 60 weight percent.

**In** an embodiment, the thermoplastic composition can comprise 45 to 63 weight percent of the first poly(phenylene ether); 25 to 43 weight percent of the polystyrene; 1 to 5 weight percent of a hydrogenated block copolymer of a conjugated diene and an alkenyl aromatic; and 1 to 5 weight percent of an additive composition.

**In** a further embodiment, the thermoplastic composition can comprise 45 to 63 weight percent of the first poly(phenylene ether); 35 to 45 weight percent of the polystyrene; 1 to 5 weight percent of a hydrogenated block copolymer of a conjugated diene and an alkenyl aromatic; and 0.1 to 5 weight percent of an additive composition.

In an embodiment, the thermoplastic composition can comprise 45 to 63 weight percent of a combination of the first poly(phenylene ether) and the second poly(phenylene ether); 25 to 43 weight percent of the polystyrene; 1 to 5 weight percent of a hydrogenated block copolymer of a conjugated diene and an alkenyl aromatic; and 1 to 5 weight percent of an additive composition. The first poly(phenylene ether) and the second poly(phenylene ether) can be present in a weight ratio of 0.9:1 to 10:1, or 0.9:1 to 2:1, or 0.9:1 to 1.1:1.

In a further embodiment, the thermoplastic composition can comprise 45 to 63 weight percent of a combination of the first poly(phenylene ether) and the second poly(phenylene ether); 35 to 45 weight percent of the polystyrene; 1 to 5 weight percent of a hydrogenated block copolymer of a conjugated diene and an alkenyl aromatic; and 0.1 to 5 weight percent of an additive composition.

In an embodiment, the thermoplastic composition can comprise 32 to 42 weight percent of the first poly(phenylene ether); 25 to 43 weight percent of the polystyrene; 1 to 5 weight percent of a hydrogenated block copolymer of a conjugated diene and an alkenyl aromatic; 1 to 5 weight percent of an additive composition; and 20 to 40 weight percent of a reinforcing filler. The reinforcing filler can comprise glass fiber.

In an embodiment, the thermoplastic composition can comprise 32 to 42 weight percent of a combination of the first poly(phenylene ether) and the second poly(phenylene ether); 25 to 43 weight percent of the polystyrene; 1 to 5 weight percent of a hydrogenated block copolymer of a conjugated diene and an alkenyl aromatic; 1 to 5 weight percent of an additive composition; and 20 to 40 weight percent of a reinforcing filler. The reinforcing filler can comprise glass fiber.

It will be understood that the total amounts of each component of the composition sums to 100 weight percent. The skilled person, guided by the present disclosure, understands how to select components within the given range in order to reach a total of 100 weight percent.

The thermoplastic composition of the present invention can provide a desirable combination of properties. For example, a molded sample of the composition can exhibit at least a 50% improvement in number of cycles to failure at a stress of 25 MPa and a frequency of 10 Hz, according to a modified ASTM D7791 method, wherein ISO 527 type-1 test specimens were used. In an embodiment, a molded sample of the composition can withstand at least 100,000 cycles before failure at a stress of 25 MPa and a frequency of 10 Hz, according to a modified ASTM D7791 method, using ISO 527 type-1 test specimens.

The composition of the present invention can be manufactured, for example, by melt blending the components of the composition. A further aspect of the invention is a method for the manufacture of the thermoplastic composition of the present invention as defined above, the method comprising: melt-mixing the components of the composition; and optionally, extruding the composition. The components of the composition can be mixed or blended using common equipment such as ribbon blenders, HENSCHEL^{™} mixers, BANBURY^{™} mixers, drum tumblers, and the like, and the blended composition can subsequently be melt-blended or melt-kneaded. The melt-blending or melt-kneading can be performed using common equipment such as single-screw extruders, twin-screw extruders, multi-screw extruders, co-kneaders, and the like. For example, the present composition can be prepared by melt-blending the components in a twin-screw extruder at a temperature of 270 to 350°C, or 280 to 340°C. The extrudate can be immediately quenched in a water bath and pelletized. The pellets so prepared can be 0.635 cm (one-fourth inch) long or less as desired. Such pellets can be used for subsequent molding, shaping, or forming.

Shaped, formed, or molded articles comprising the composition represent another aspect of the present invention. In particular, a further aspect of the invention is an article comprising the thermoplastic composition of the invention as defined above, in particular a water-contacting article, further particularly a water pipe or fitting, a hydro-block component, a water meter housing, a faucet, an impeller, or a pump housing. The composition can be molded into useful shaped articles by a variety of methods, such as injection molding, extrusion, rotational molding, blow molding and thermoforming. The composition can be particularly wellsuited for fabricating water-contacting articles. Exemplary articles can include faucets, hydroblocks, impellers, as well as other articles that must exhibit dimensional stability and mechanical strength when exposed to hot water. Articles can be prepared from the composition using fabrication methods known in the art, including, for example, single layer and multilayer foam extrusion, single layer and multilayer sheet extrusion, injection molding, blow molding, extrusion, film extrusion, profile extrusion, pultrusion, compression molding, thermoforming, pressure forming, hydroforming, vacuum forming, foam molding, and the like. Combinations of the foregoing article fabrication methods can be used.

As described herein, the present inventor has unexpectedly discovered that a composition including specific amounts of the components described herein can provide certain advantageous properties. In particular, improved fatigue resistance can be obtained. Therefore, a significant improvement is provided by the present invention, specifically as it relates to water-contacting articles.

This invention is further illustrated by the following examples, which are nonlimiting.

### EXAMPLES

Materials used in the following Examples are described in Table 1.

**Table 1**

| Component | Description | Supplier |
|---|---|---|
| PPE-1 | Poly(2,6-dimethyl-1,4-phenylene ether), CAS Reg. No. 24938-67-8, having an intrinsic viscosity of 0.30 deciliter per gram as measured in chloroform at 25°C | SABIC |
| PPE-2 | Poly(2,6-dimethyl-1,4-phenylene ether), CAS Reg. No. 24938-67-8, having an intrinsic viscosity of 0.40 deciliter per gram as measured in chloroform at 25°C | SABIC |
| PPE-3 | Poly(2,6-dimethyl-1,4-phenylene ether), CAS Reg. No. 24938-67-8, having an intrinsic viscosity of 0.46 deciliter per gram as measured in chloroform at 25°C | SABIC |
| PPE-4 | Poly(2,6-dimethyl-1,4-phenylene ether), CAS Reg. No. 24938-67-8, having an intrinsic viscosity of 0.68 deciliter per gram as measured in chloroform at 25°C | SABIC |
| PPE-5 | Poly(2,6-dimethyl-1,4-phenylene ether), CAS Reg. No. 24938-67-8, having an intrinsic viscosity of 1.02 deciliter per gram as measured in chloroform at 25°C | SABIC |
| PPE-6 | Poly(2,6-dimethyl-1,4-phenylene ether), CAS Reg. No. 24938-67-8, having an intrinsic viscosity of 1.23 deciliter per gram as measured in chloroform at 25°C | SABIC |
| PPE-7 | Poly(2,6-dimethyl-1,4-phenylene ether), CAS Reg. No. 24938-67-8, having an intrinsic viscosity of 1.4 deciliter per gram as measured in chloroform at 25°C | SABIC |
| SEBS | Polystyrene-poly(ethylene-butylene)-polystyrene triblock copolymer, having a polystyrene content of 30 weight percent and a negligible melt flow, measured at 200 °C and 5-kilogram load according to ASTM D1238; obtained as KRATON^{™} G1651 E Polymer | Kraton |
| LDPE | Low density polyethylene, obtained as LDPE 1922 P9 | SABIC |
| AO-1 | Octadecyl 3,5-di-tert-butyl-4-hydroxyhydrocinnamate, CAS Reg. No. 2082-79-3; obtained as IRGANOX^{™} 1076 | BASF |
| AO-2 | Reaction products of phosphorus trichloride with 1,1'-biphenyl and 2,4-bis(1,1-dimethylethyl)phenol, CAS Reg. No. 119345-01-6; obtained as HOSTANOX^{™} P-EPQ^{™} | Clariant |
| ccPS-1 | Crystal clear polystyrene having a melt flow index of 2.4 g/10 min, measured at 200 °C and 5-kilogram load according to ISO1133H, obtained as POLYSTYRENE CRYSTAL 1160 | TotalEnergies |
| ccPS-2 | Crystal clear polystyrene having a melt flow index of 30 g/10 min, measured at 200 °C and 5-kilogram load according to ISO1133H, obtained as POLYSTYRENE CRYSTAL 1960N | TotalEnergies |
| GF | Glass fibers, obtained as FoodContact^{™} 242N | Owens Corning |
| CA | Citric acid anhydride | |

Compositions were compounded using a Coperion ZSK 25 millimeter (mm) twin screw extruder. All components were added at a first feed throat of the extruded, except for ccPS which was added through a second feed throat, and the glass fibers, when present, were added downstream. The extrudate was cooled in a water bath and pelletized. Pellets were conditioned at 100°C for 2 hours prior to injection molding or extrusion molding. The processing parameters used are summarized in Table 2.

**Table 2**

| | |
|---|---|
| Feed (Zone 0) Temp. | -- |
| Zone 1 Temp. | 40 °C |
| Zone 2 Temp. | 210 °C |
| Zone 3 Temp. | 260 °C |
| Zone 4 Temp. | 280 °C |
| Zone 5 Temp. | 280 °C |
| Zone 6 Temp. | 270 °C |
| Zone 7 Temp. | 280 °C |
| Zone 8 Temp. | 280 °C |
| Zone 9 Temp. | 290 °C |
| Zone 10 Temp. | 300 °C |
| Zone 11 Temp. | 300 °C |
| Zone 12 Temp. | -- |
| Die Temp. | 290 °C |
| Screw Speed | 300 rpm |
| Throughput | 13-20 kg/hr |

Test articles were injection molded on an Engel 110T injection molding machine operating at barrel temperatures of 260 °C, 270 °C, and 290 °C (from feed throat to nozzle), and a mold temperature of 80 °C.

Properties of the molded parts were tested according to the following standards. Fatigue testing was determined at a stress level of 25 MPa and at a frequency of 10 Hz, according to ASTM D7791 on ISO-527 type 1 tensile bars. The number of cycles until failure occurred are reported. Testing was concluded at 1,000,000 cycles if no failure had occurred. Melt volume-flow rate (MVR) was determined according to ISO 1133 under a load of 10 kilograms, a dwell time of 300 s, and at a temperature of 300°C.

Compositions and properties are summarized in Table 3. The amount of each component is provided in weight percent based on the total weight of the composition.

**Table 3**

| Component | Units | E1* | E2* | E3* | E4 | E5 | E6 | E7 | E8 |
|---|---|---|---|---|---|---|---|---|---|
| PPE-1 | wt% | 53.6 | | | | | | | |
| PPE-2 | wt% | | 53.6 | | | | | | |
| PPE-3 | wt% | | | 53.6 | | | | | |
| PPE-4 | wt% | | | | 53.6 | | | | |
| PPE-5 | wt% | | | | | 53.6 | | | |
| PPE-6 | wt% | | | | | | 53.6 | | |
| PPE-7 | wt% | | | | | | | 53.6 | 53.6 |
| SEBS | wt% | 4.0 | 4.0 | 4.0 | 4.0 | 4.0 | 4.0 | 4.0 | 4.0 |
| LDPE | wt% | 2.1 | 2.1 | 2.1 | 2.1 | 2.1 | 2.1 | 2.1 | 2.1 |
| AO-1 | wt% | 0.2 | 0.2 | 0.2 | 0.2 | 0.2 | 0.2 | 0.2 | 0.2 |
| AO-2 | wt% | 0.2 | 0.2 | 0.2 | 0.2 | 0.2 | 0.2 | 0.2 | 0.2 |
| ccPS-1 | wt% | 39.9 | 39.9 | 39.9 | 39.9 | 39.9 | 39.9 | 39.9 | |
| ccPS-2 | wt% | | | | | | | | 39.9 |
| GF | wt% | | | | | | | | |
| CA | wt% | | | | | | | | |
| Properties | Units | E1* | E2* | E3* | E4 | E5 | E6 | E7 | E8 |
| MVR | cm³/10 min | 111.6 | 80.3 | 60.7 | 17.1 | 7.1 | 3.5 | 2.4 | 3.8 |
| Fatigue, cycles to failure, 10Hz/25MPa | | 16,994 | 31,368 | 52,662 | 550,636 | 186,486 | 447,724 | 935,147 | 1,000,000 |

| | | | | | | | | | |
|---|---|---|---|---|---|---|---|---|---|
| *indicates a comparative example | | | | | | | | | |

**Table 3 (cont.)**

| Component | Units | E9 | E10 | E11 | E12 | E13 | E14* | E15 | E16 |
|---|---|---|---|---|---|---|---|---|---|
| PPE-1 | wt% | | | | | | | | |
| PPE-2 | wt% | 26.8 | | | | | 37.5 | 18.8 | |
| PPE-3 | wt% | | | | | | | | |
| PPE-4 | wt% | | 69.6 | | | | | | |
| PPE-5 | wt% | | | 63.4 | | | | | |
| PPE-6 | wt% | | | | 47.7 | | | | |
| PPE-7 | wt% | 26.8 | | | | 52.7 | | 18.8 | 37.5 |
| SEBS | wt% | 4.0 | 4.0 | 4.0 | 4.0 | 4.0 | 2.8 | 2.8 | 2.8 |
| LDPE | wt% | 2.1 | 2.1 | 2.1 | 2.1 | 2.1 | 1.5 | 1.5 | 1.5 |
| AO-1 | wt% | 0.2 | 0.2 | 0.2 | 0.2 | 0.2 | 0.2 | 0.2 | 0.2 |
| AO-2 | wt% | 0.2 | 0.2 | 0.2 | 0.2 | 0.2 | 0.2 | 0.2 | 0.2 |
| ccPS-1 | wt% | 39.9 | 23.9 | 30.1 | 45.8 | 39.9 | 27.9 | 27.9 | 27.9 |
| ccPS-2 | wt% | | | | | | | | |
| GF | wt% | | | | | | 30.0 | 30.0 | 30.0 |
| CA | wt% | | | | | 0.9 | | | |
| Properties | Units | E9 | E10 | E11 | E12 | E13 | E14* | E15 | E16 |
| MVR | cm³/10 min | 18.6 | 7.0 | 1.8 | 5.3 | 1.6 | 22.0 | 3.7 | 0.8 |
| Fatigue, cycles to failure, 10Hz/25MPa | | 125,472 | 796,260 | 543,689 | 228,871 | 1,000,000 | | | |

| | | | | | | | | | |
|---|---|---|---|---|---|---|---|---|---|
| *indicates a comparative example | | | | | | | | | |

As shown in Table 3, compositions including higher molecular weight PPE exhibited a significantly improved time to failure under different loads at 10 Hz. For example, as shown in FIG. 1, comparing examples E1-E7 shows that a PPE intrinsic viscosity of at least 0.50 dl/g is needed to achieve at least 100,000 cycles at 25 MPa and 10 Hz. Example E9 uses a 50:50 (w/w) combination of a PPE having an intrinsic viscosity of 0.4 dl/g and a PPE having an intrinsic viscosity of 1.40 dl/g showed improved flow but still achieved at least 100,000 cycles until failure. Examples E10 and E11 suggest that the PPE content in the composition can affect the fatigue performance. The compositions according to these examples provided a higher number of cycles until failure, for example compared to examples E4 and E5, believed to be due to the increase in PPE content. Example E12, having a lower PPE content than the composition of E6, gave less cycles until failure relative to E6, but still met the 100,000-cycle threshold.

The compositions according to the present invention therefore maintained a desirable combination of physical properties. A significant improvement in fatigue-resistant thermoplastic compositions is therefore provided by the present invention.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an embodiment" means that a particular element described in connection with the embodiment is included in at least one embodiment described herein, and may or may not be present in other embodiments. The term "combination thereof" as used herein includes one or more of the listed elements, and is open, allowing the presence of one or more like elements not named. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A thermoplastic composition comprising:
30 to 85 weight percent of a first poly(phenylene ether) having an intrinsic viscosity of greater than 0.5 to 1.45 deciliters per gram, measured at 25°C in chloroform using an Ubbelohde viscometer, and
optionally, a second poly(phenylene ether) having an intrinsic viscosity of 0.3 to 0.5 deciliters per gram, measured at 25°C in chloroform using an Ubbelohde viscometer,
provided that a weighted average of the intrinsic viscosity of the first poly(phenylene ether) and the second poly(phenylene ether) is greater than 0.5 deciliters per gram; and
15 to 70 weight percent of a homopolystyrene;
wherein weight percent of each component is based on the total weight of the composition.

2. The thermoplastic composition of claim 1, further comprising 1 to 15 weight percent of a hydrogenated block copolymer of a conjugated diene and an alkenyl aromatic, based on the total weight of the composition.

3. The thermoplastic composition of claim 1 or 2, further comprising 1 to 10 weight percent of an additive composition, preferably wherein the additive composition comprises a mold release agent, an antioxidant, or a combination thereof, based on the total weight of the composition.

4. The thermoplastic composition of any of claims 1 to 3, wherein the thermoplastic composition comprises 5 to 55 weight percent of a reinforcing filler, based on the total weight of the composition, preferably glass fibers.

5. The thermoplastic composition of any of claims 1 to 4, wherein the first poly(phenylene ether) has an intrinsic viscosity of 0.65 to 1.45 deciliters per gram.

6. The thermoplastic composition of any of claims 1 to 5, wherein the thermoplastic composition comprises the first poly(phenylene ether) having an intrinsic viscosity of greater than 0.5 to 1.45 deciliters per gram and the second poly(phenylene ether) having an intrinsic viscosity of 0.3 to 0.5 deciliters per gram.

7. The thermoplastic composition of claim 6, wherein the first poly(phenylene ether) and the second poly(phenylene ether) are present in a weight ratio of 0.9:1 to 10:1, or 0.9:1 to 2:1, or 0.9:1 to 1.1:1.

8. The thermoplastic composition of any of claims 1 to 7, wherein the composition comprises less than 15 weight percent of a rubber-modified polystyrene, preferably wherein the composition comprises less than 1 weight percent of a rubber-modified polystyrene, based on the total weight of the composition, more preferably wherein a rubber-modified polystyrene is excluded from the composition.

9. The thermoplastic composition of claim 1, comprising:
45 to 63 weight percent of the first poly(phenylene ether);
35 to 45 weight percent of the polystyrene;
1 to 5 weight percent of a hydrogenated block copolymer of a conjugated diene and an alkenyl aromatic; and
0.1 to 5 weight percent of an additive composition,
wherein weight percent is based on the total weight of the composition.

10. The thermoplastic composition of claim 1, comprising:
45 to 63 weight percent of a combination of the first poly(phenylene ether) and the second poly(phenylene ether);
35 to 45 weight percent of the polystyrene;
1 to 5 weight percent of a hydrogenated block copolymer of a conjugated diene and an alkenyl aromatic; and
0.1 to 5 weight percent of an additive composition,
wherein weight percent is based on the total weight of the composition.

11. The thermoplastic composition of any of claims 1 to 10, wherein a molded sample of the composition exhibits at least a 50% improvement in number of cycles to failure at a pressure of 25 MPa and a frequency of 10 Hz, according to ASTM D7791, relative to a comparative composition not including the first poly(phenylene ether).

12. A method for the manufacture of the thermoplastic composition of any of claims 1 to 11, the method comprising:
melt-mixing the components of the composition; and
optionally, extruding the composition.

13. An article comprising the thermoplastic composition of any of claims 1 to 11.

14. The article of claim 13, wherein the article is a water-contacting article.

15. The article of claim 14, wherein the article is a water pipe or fitting, a hydro-block component, a water meter housing, a faucet, an impeller, or a pump housing.

## Patentansprüche

1. Thermoplastische Zusammensetzung, welche umfasst:
30 bis 85 Gew.-% eines ersten Poly(phenylenethers) mit einer Grenzviskosität von mehr als 0,5 bis 1,45 Dezilitern pro Gramm, gemessen bei 25 °C in Chloroform mit einem Ubbelohde-Viskosimeter, und
optional einen zweiten Poly(phenylenether) mit einer Grenzviskosität von 0,3 bis 0,5 Dezilitern pro Gramm, gemessen bei 25 °C in Chloroform mit einem Ubbelohde-Viskosimeter,
vorausgesetzt, dass der gewichtete Mittelwert der Grenzviskosität des ersten Poly(phenylenethers) und des zweiten Poly(phenylenethers) mehr als 0,5 Dezilitern pro Gramm beträgt; und
15 bis 70 Gew.-% eines Homopolystyrols;
wobei die Gewichtsprozente von jeder Komponente auf das Gesamtgewicht der Zusammensetzung bezogen sind.

2. Thermoplastische Zusammensetzung nach Anspruch 1, ferner umfassend, bezogen auf das Gesamtgewicht der Zusammensetzung, 1 bis 15 Gew.-% eines hydrierten Blockcopolymers aus einem konjugierten Dien und einem Alkenylaromaten.

3. Thermoplastische Zusammensetzung nach Anspruch 1 oder 2, ferner umfassend, bezogen auf das Gesamtgewicht der Zusammensetzung, 1 bis 10 Gew.-% einer Additivzusammensetzung, wobei die Additivzusammensetzung vorzugsweise ein Formtrennmittel, ein Antioxidans oder eine Mischung hiervon umfasst.

4. Thermoplastische Zusammensetzung nach einem der Ansprüche 1 bis 3, wobei die thermoplastische Zusammensetzung, bezogen auf das Gesamtgewicht der Zusammensetzung, 5 bis 55 Gew.-% eines Verstärkungsfüllstoffs, vorzugsweise Glasfasern, umfasst.

5. Thermoplastische Zusammensetzung nach einem der Ansprüche 1 bis 4, wobei der erste Poly(phenylenether) eine Grenzviskosität von 0,65 bis 1,45 Dezilitern pro Gramm aufweist.

6. Thermoplastische Zusammensetzung nach einem der Ansprüche 1 bis 5, wobei die thermoplastische Zusammensetzung den ersten Poly(phenylenether) mit einer Grenzviskosität von mehr als 0,5 bis 1,45 Dezilitern pro Gramm und den zweiten Poly(phenylenether) mit einer Grenzviskosität von 0,3 bis 0,5 Dezilitern pro Gramm umfasst.

7. Thermoplastische Zusammensetzung nach Anspruch 6, wobei der erste Poly(phenylenether) und der zweite Poly(phenylenether) in einem Gewichtsverhältnis von 0,9:1 bis 10:1 oder 0,9:1 bis 2:1 oder 0,9:1 bis 1,1:1 vorliegen.

8. Thermoplastische Zusammensetzung nach einem der Ansprüche 1 bis 7, wobei die Zusammensetzung, bezogen auf das Gesamtgewicht der Zusammensetzung, weniger als 15 Gew.-% eines kautschukmodifizierten Polystyrols enthält, wobei die Zusammensetzung vorzugsweise weniger als 1 Gew.-% eines kautschukmodifizierten Polystyrols enthält, wobei besonders bevorzugt ein kautschukmodifiziertes Polystyrol von der Zusammensetzung ausgeschlossen ist.

9. Thermoplastische Zusammensetzung nach Anspruch 1, welche umfasst:
45 bis 63 Gew.-% des ersten Poly(phenylenethers);
35 bis 45 Gew.-% des Polystyrols;
1 bis 5 Gew.-% eines hydrierten Blockcopolymers aus einem konjugierten Dien und einem Alkenylaromaten und
0,1 bis 5 Gew.-% einer Additivzusammensetzung,
wobei die Gewichtsprozente auf das Gesamtgewicht der Zusammensetzung bezogen sind.

10. Thermoplastische Zusammensetzung nach Anspruch 1, welche umfasst:
45 bis 63 Gew.-% einer Mischung aus dem ersten Poly(phenylenether) und dem zweiten Poly(phenylenether);
35 bis 45 Gew.-% des Polystyrols;
1 bis 5 Gew.-% eines hydrierten Blockcopolymers aus einem konjugierten Dien und einem Alkenylaromaten und
0,1 bis 5 Gew.-% einer Additivzusammensetzung,
wobei die Gewichtsprozente auf das Gesamtgewicht der Zusammensetzung bezogen sind.

11. Thermoplastische Zusammensetzung nach einem der Ansprüche 1 bis 10, wobei ein Formteil der Zusammensetzung eine um mindestens 50 % verbesserte Anzahl an Lastwechseln bis zum Versagen bei einem Druck von 25 MPa und einer Frequenz von 10 Hz gemäß ASTM D7791 im Vergleich zu einer Vergleichszusammensetzung ohne den ersten Poly(phenylenether) aufweist.

12. Verfahren zur Herstellung einer thermoplastischen Zusammensetzung nach einem der Ansprüche 1 bis 11, welches umfasst:
Schmelzmischen der Komponenten der Zusammensetzung und
gegebenenfalls Extrudieren der Zusammensetzung.

13. Gegenstand, der die thermoplastische Zusammensetzung nach einem der Ansprüche 1 bis 11 umfasst.

14. Gegenstand nach Anspruch 13, wobei der Gegenstand ein wasserberührender Gegenstand ist.

15. Gegenstand nach Anspruch 14, wobei der Gegenstand ein Wasserrohr oder Wasserrohranschlussstück, ein Bauteil eines Hydraulikblocks, ein Wasserzählergehäuse, ein Wasserhahn, ein Laufrad oder ein Pumpengehäuse ist.

## Revendications

1. Composition thermoplastique comprenant :
30 à 85 pour cent en poids d'un premier poly(phénylène éther) ayant une viscosité intrinsèque supérieure à 0,5 et allant jusqu'à 1,45 décilitre par gramme, mesurée à 25°C dans du chloroforme en utilisant un viscosimètre d'Ubbelohde, et
optionnellement, un second poly(phénylène éther) ayant une viscosité intrinsèque allant de 0,3 à 0,5 décilitre par gramme, mesurée à 25°C dans du chloroforme en utilisant un viscosimètre d'Ubbelohde,
à condition que la moyenne pondérée de la viscosité intrinsèque du premier poly(phénylène éther) et du second poly(phénylène éther) soit supérieure à 0,5 décilitre par gramme ; et
15 à 70 pour cent en poids d'un homopolystyrène ;
dans laquelle le pourcentage en poids de chaque composant est basé sur le poids total de la composition.

2. Composition thermoplastique selon la revendication 1, comprenant en outre 1 à 15 pour cent en poids d'un copolymère séquencé hydrogéné d'un diène conjugué et d'un composé aromatique alcényle, par rapport au poids total de la composition.

3. Composition thermoplastique selon la revendication 1 ou 2, comprenant en outre 1 à 10 pour cent en poids d'une composition d'additifs, de préférence dans laquelle la composition d'additifs comprend un agent de démoulage, un antioxydant ou une combinaison de ceux-ci, par rapport au poids total de la composition.

4. Composition thermoplastique selon l'une des revendications 1 à 3, dans laquelle la composition thermoplastique comprend 5 à 55 pour cent en poids d'une charge de renforcement, par rapport au poids total de la composition, de préférence des fibres de verre.

5. Composition thermoplastique selon l'une des revendications 1 à 4, dans laquelle le premier poly(phénylène éther) a une viscosité intrinsèque allant de 0,65 à 1,45 décilitre par gramme.

6. Composition thermoplastique selon l'une des revendications 1 à 5, dans laquelle la composition thermoplastique comprend le premier poly(phénylène éther) ayant une viscosité intrinsèque supérieure à 0,5 et allant jusqu'à 1,45 décilitre par gramme et le second poly(phénylène éther) ayant une viscosité intrinsèque allant de 0,3 à 0,5 décilitre par gramme.

7. Composition thermoplastique selon la revendication 6, dans laquelle le premier poly(phénylène éther) et le second poly(phénylène éther) sont présents dans un rapport en poids de 0,9:1 à 10:1, ou de 0,9:1 à 2:1, ou de 0,9:1 à 1,1:1.

8. Composition thermoplastique selon l'une des revendications 1 à 7, dans laquelle la composition comprend moins de 15 pour cent en poids d'un polystyrène modifié par du caoutchouc, de préférence dans laquelle la composition comprend moins de 1 pour cent en poids d'un polystyrène modifié par du caoutchouc, par rapport au poids total de la composition, de préférence dans laquelle un polystyrène modifié par du caoutchouc est exclu de la composition.

9. Composition thermoplastique selon la revendication 1, comprenant :
45 à 63 pour cent en poids du premier poly(phénylène éther) ;
35 à 45 pour cent en poids du polystyrène ;
1 à 5 pour cent en poids d'un copolymère séquencé hydrogéné d'un diène conjugué et d'un composé aromatique alcényle ; et
0,1 à 5 pour cent en poids d'une composition d'additifs,
dans laquelle le pourcentage en poids est basé sur le poids total de la composition.

10. Composition thermoplastique selon la revendication 1, comprenant :
45 à 63 pour cent en poids d'une combinaison du premier poly(phénylène éther) et du second poly(phénylène éther) ;
35 à 45 pour cent en poids du polystyrène ;
1 à 5 pour cent en poids d'un copolymère séquencé hydrogéné d'un diène conjugué et d'un composé aromatique alcényle ; et
0,1 à 5 pour cent en poids d'une composition d'additifs,
dans laquelle le pourcentage en poids est basé sur le poids total de la composition.

11. Composition thermoplastique selon l'une des revendications 1 à 10, dans laquelle un échantillon moulé de la composition présente une amélioration d'au moins 50% du nombre de cycles à la rupture à une pression de 25 MPa et une fréquence de 10 Hz, selon la norme ASTM D7791, par rapport à une composition comparative ne comprenant pas le premier poly(phénylène éther).

12. Procédé de fabrication de la composition thermoplastique selon l'une des revendications 1 à 11, le procédé comprenant :
le mélange à l'état fondu des composants de la composition ; et
optionnellement, l'extrusion de la composition.

13. Article comprenant la composition thermoplastique selon l'une des revendications 1 à 11.

14. Article selon la revendication 13, dans lequel l'article est un article en contact avec l'eau.

15. Article selon la revendication 14, dans lequel l'article est un tuyau ou un raccord d'eau, un composant hydro-bloc, un boîtier de compteur d'eau, un robinet, une turbine ou un boîtier de pompe.
